# EUROPEAN PATENT SPECIFICATION

(11) **EP 4 293 608 B1**
(45) Date of publication and mention of the grant of the patent: **18.11.2026**
(21) Application number: 22796042.4
(22) Date of filing: 21.04.2022
(51) Int. Cl.: H04M 1/72454, G06Q 30/0601, G06Q 50/10

(54) **CONTROL METHOD BASED ON PREDICTION USING USE PATTERN AND APPARATUS THEREFOR**
STEUERUNGSVERFAHREN AUF DER BASIS VON PRÄDIKTION UNTER VERWENDUNG EINES NUTZUNGSMUSTERS UND VORRICHTUNG DAFÜR
PROCÉDÉ DE COMMANDE BASÉ SUR UNE PRÉDICTION UTILISANT UN MOTIF D'UTILISATION ET APPAREIL ASSOCIÉ

(30) Priority: 27.04.2021 KR 20210054143
(43) Date of publication of application: 20.12.2023
(73) Proprietor: Samsung Electronics Co., Ltd., Suwon-si, Gyeonggi-do 16677 (KR)
(72) Inventor: LEE, Changku, Suwon-si Gyeonggi-do 16677 (KR); PARK, Byul, Suwon-si Gyeonggi-do 16677 (KR)
(74) Representative: Appleyard Lees IP LLP
(86) International application number: PCT/KR2022/005710
(87) International publication number: WO 2022/231209

(56) References cited:
- WO-A1-2020/167392
- JP-A- 2019 057 290
- KR-A- 20150 128 139
- KR-A- 20180 130 663
- KR-A- 20190 139 773
- US-A1- 2014 357 312
- SEMAR DHANISH ET AL: "Automating SmartPhone Automation: Enhancing User Experience with Behaviour Learning", 2013 22ND AUSTRALIAN SOFTWARE ENGINEERING CONFERENCE, IEEE, 28 September 2015 (2015-09-28), pages 108 - 117, XP032836949, ISSN: 1530-0803, [retrieved on 20151224], DOI: 10.1109/ASWEC.2015.22

## Description

### BACKGROUND

### Field

One or more embodiments of the instant disclosure generally relate to a prediction-based control method using a usage pattern and a device performing the control method.

### Description of Related Art

Due to the advancement of electronic devices and related services, increasing number of services and increasing amount of information are made available for users. Repeated usage of the electronic device and associated services by a user may form a certain usage pattern of the electronic device and the services, and such a usage pattern may be used to provide the user with customized services and information. To detect the usage pattern and provide the user with customized services and information, various methods may be used. The methods may include, for example, data storage and management for storing records of used devices and services, data processing for extracting significant information from such usage records, data recognition for recognizing usage patterns from usage records, and sensing capabilities for sensing usage environments or surrounding situations.

Patent publication KR20190139773A describes an apparatus for extending a context for extending a context between loT devices, which comprises a memory storing one or more instructions, and at least one processor executing the one or more instructions stored in the memory. The at least one processor receives context information from an apparatus for generating context information, determines a context extending action based on the received context information and a generated context extending trigger event in accordance with the generation of the context extending trigger event, and performs the determined context extending action.
Conference publication SEMAR DHANISH ET AL, "Automating SmartPhone Automation: Enhancing User Experience with Behaviour Learning", 2013 22ND AUSTRALIAN SOFTWARE ENGINEERING CONFERENCE, IEEE, doi:10.1109/ASWEC.2015.22, ISSN 1530-0803, pages 108-117 describes

### SUMMARY

According to an example embodiment, a control method is provided, as set out in accompanying claim 1.

.

Other features and aspects will be apparent from the following detailed description, the drawings, and the claims.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a block diagram illustrating an example electronic device in a network environment according to an example embodiment;
FIG. 2 is a block diagram illustrating an example program according to an example embodiment;
FIG. 3A is a flowchart illustrating an example control operation according to an example embodiment;
FIG. 3B is a diagram illustrating an example pattern registration screen according to an example embodiment;
FIG. 3C is a diagram illustrating an example usage pattern list according to an example embodiment;
FIG. 3D is a diagram illustrating an example intent ticket setting screen according to an example embodiment;
FIG. 3E is a diagram illustrating another example usage pattern list according to an example embodiment;
FIG. 3F is a diagram illustrating an example intent action performing screen according to an example embodiment;
FIG. 4 is a diagram illustrating an example of collecting a content record according to an example embodiment;
FIG. 5 is a diagram illustrating an example of collecting a context record according to an example embodiment;
FIG. 6 is a diagram illustrating an example data structure of a combination database (DB) according to an example embodiment;
FIG. 7 is a diagram illustrating an example of extracting a usage pattern from a combination DB according to an example embodiment;
FIG. 8 is a diagram illustrating an example data structure of a usage pattern DB according to an example embodiment;
FIG. 9 is a diagram illustrating an example intent ticket according to an example embodiment;
FIG. 10 is a flowchart illustrating an example control method according to an example embodiment; and
FIG. 11 is a block diagram illustrating an example control device according to an example embodiment.

### DETAILED DESCRIPTION

Hereinafter, certain example embodiments will be described in greater detail with reference to the accompanying drawings. When describing the example embodiments with reference to the accompanying drawings, like reference numerals refer to like elements and a repeated description related thereto will be omitted.

According to certain example embodiments, patterns of using a device (hereinafter device usage pattern) by a user in various situations may be recognized, and the usage pattern may be used to predict an intention of the user and provide one or more recommendations.

According to certain example embodiments, the user may conveniently receive a service that may meet his/her intention with minimal inputs.

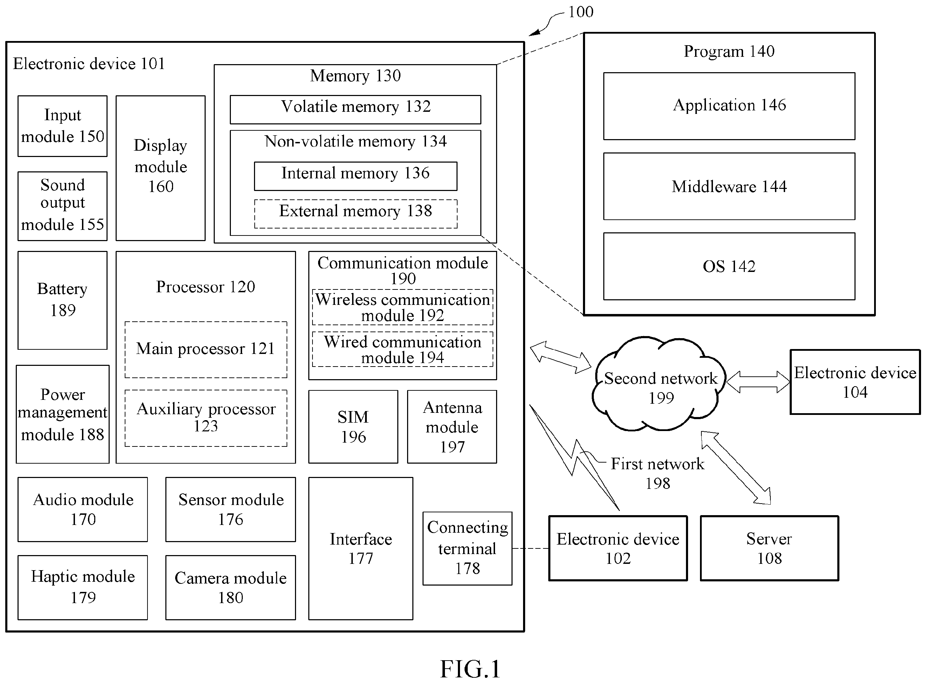

FIG. 1 is a block diagram illustrating an example of an electronic device in a network environment according to an example embodiment. It shall be understood electronic devices are not limited to the following, may omit certain components, and may add other components. Referring to FIG. 1, an electronic device 101 in a network environment 100 may communicate with an electronic device 102 via a first network 198 (e.g., a short-range wireless communication network), or communicate with at least one of an electronic device 104 and a server 108 via a second network 199 (e.g., a long-range wireless communication network). The electronic device 101 may communicate with the electronic device 104 via the server 108. The electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the above components may be omitted from the electronic device 101, or one or more other components may be added in the electronic device 101. In some embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least a part of data processing or computation, the processor 120 may store a command or data received from another component (e.g., the sensor module 176 or the communication module 190) in a volatile memory 132, process the command or data stored in the volatile memory 132, and store resulting data in a non-volatile memory 134. The processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with, the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121. The term "processor" shall be understood to refer to both the singular and plural contexts.

The auxiliary processor 123 may control at least some of functions or states related to at least one (e.g., the display device 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). The auxiliary processor 123 (e.g., an ISP or a CP) may be implemented as a portion of another component (e.g., the camera module 180 or the communication module 190) that is functionally related to the auxiliary processor 123. The auxiliary processor 123 (e.g., an NPU) may include a hardware structure specified for artificial intelligence (AI) model processing. An Al model may be generated by machine learning. Such learning may be performed by, for example, the electronic device 101 in which the Al model is performed, or performed via a separate server (e.g., the server 108). Learning algorithms may include, but are not limited to, for example, supervised learning, unsupervised learning, semi-supervised learning, or reinforcement learning. The Al model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The Al model may alternatively or additionally include a software structure other than the hardware structure.

The memory 130 may store various data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134. The non-volatile memory 134 may include an internal memory 136 and an external memory 138.

The memory 130 may include instructions executable in the processor 120. When the instructions are executed in the processor 120, the processor 120 may perform a control operation. For example, in response to an occurrence of a first action relating to a first content in a first context, the processor 120 may recognize a first operation specified by the first context, the first content, and the first action, detect a first usage pattern having a preceding operation corresponding to the first operation from a usage pattern database (DB), set a trigger condition and an intent action based on a following operation of the first usage pattern, and perform the intent action as the trigger condition is satisfied.

The program 140 may be stored as software in the memory 130 and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing records. The receiver may be used to receive an incoming call. The receiver may be implemented separately from the speaker or as a part of the speaker.

The display module 160 may visually provide information to the outside (e.g., a user) of the electronic device 101. The display module 160 may include, for example, a display, a hologram device, or a projector, and a control circuitry to control a corresponding one of the display, the hologram device, and the projector. The display module 160 may include a touch sensor adapted to sense a touch, or a pressure sensor adapted to measure an intensity of a force incurred by the touch.

The audio module 170 may convert a sound into an electric signal or vice versa. The audio module 170 may obtain the sound via the input module 150 or output the sound via the sound output module 155 or an external electronic device (e.g., the electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with an external electronic device (e.g., the electronic device 102) directly (e.g., wiredly) or wirelessly. The interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). The connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus which may be recognized by a user via his or her tactile sensation or kinesthetic sensation. The haptic module 179 may include, for example, a motor, a piezoelectric element, or an electric stimulator.

The camera module 180 may capture a still image and moving images. The camera module 180 may include one or more lenses, image sensors, ISPs, or flashes.

The power management module 188 may manage power supplied to the electronic device 101. The power management module 188 may be implemented as, for example, at least a part of a power management integrated circuit (PMIC).

The battery 189 may supply power to at least one component of the electronic device 101. The battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and an external electronic device (e.g., the electronic device 102, the electronic device 104, or the server 108) and performing communication via the established communication channel. The communication module 190 may include one or more communication processors that are operable independently of the processor 120 (e.g., an AP) and that support direct (e.g., wired) communication or wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multiple components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beamforming, or a large scale antenna. The wireless communication module 192 may support various requirements specified in the electronic device 101, an external electronic device (e.g., the electronic device 104), or a network system (e.g., the second network 199). The wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

The antenna module 197 may form a mmWave antenna module. The mmWave antenna module may include a PCB, an RFIC disposed on a first surface (e.g., a bottom surface) of the PCB or adjacent to the first surface and capable of supporting a designated high-frequency band (e.g., the mmWave band), and a plurality of antennas (e.g., array antennas) disposed on a second surface (e.g., a top or a side surface) of the PCB or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general-purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the external electronic devices 102 and 104 may be a device of the same type as or a different type from the electronic device 101. All or some of operations to be executed by the electronic device 101 may be executed at one or more of the external electronic devices 102, 104, and 108. For example, if the electronic device 101 needs to perform a function or a service automatically, or in response to a request from a user or another device, the electronic device 101, instead of, or in addition to, executing the function or the service, may request one or more external electronic devices to perform at least a part of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least a part of a reply to the request. To that end, a cloud computing, distributed computing, mobile edge computing (MEC), or client-server computing technology may be used, for example. The electronic device 101 may provide ultra-low latency services using, e.g., distributed computing or mobile edge computing. In an embodiment, the external electronic device 104 may include an Internet-of-things (IoT) device. The server 108 may be an intelligent server using machine learning and/or a neural network. The external electronic device 104 or the server 108 may be included in the second network 199. The electronic device 101 may be applied to intelligent services (e.g., smart home, smart city, smart car, or healthcare) based on 5G communication technology or loT-related technology.

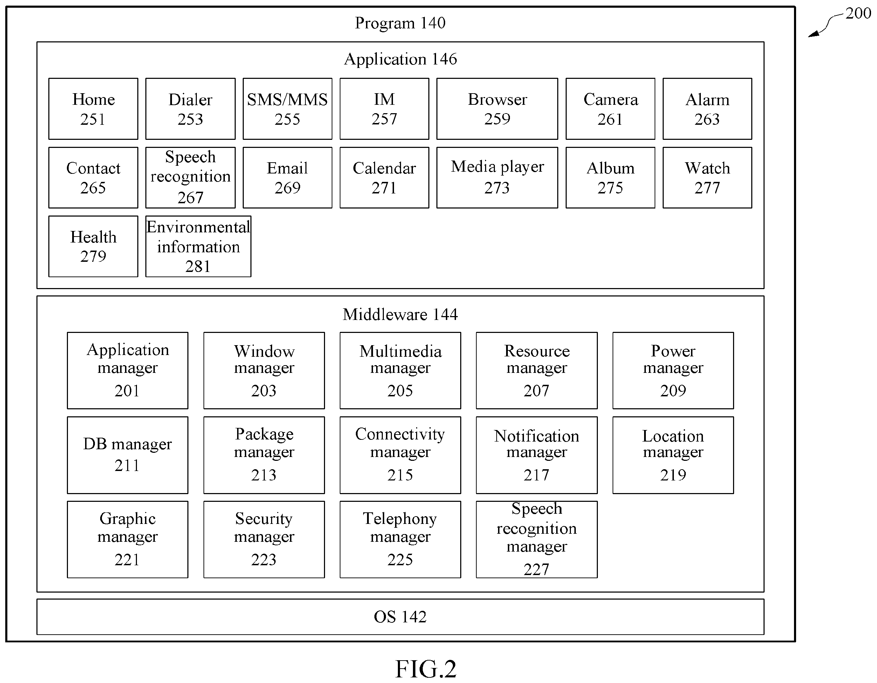

FIG. 2 is a block diagram illustrating an example program according to an example embodiment. Referring to FIG. 2, a block diagram 200 illustrates a program 140. According to an example embodiment, the program 140 may include an operating system (OS) 142 for controlling one or more resources of an electronic device 101, a middleware 144, or an application 146 executable in the OS 142. The OS 142 may include, for example, Android^{™}, iOS^{™}, Windows^{™}, Symbian^{™}, Tizen^{™}, or Bada^{™}. At least some of the program 140 may be pre-loaded in the electronic device 101 during the manufacture, or downloaded or updated from an external electronic device (e.g., the electronic device 102 or 104, or the server 108 of FIG. 1) when it is used by a user.

The OS 142 may control management (e.g., allocation or recovery) of one or more system resources (e.g., process, memory, or power supply) of the electronic device 101. The OS 142 may include, alternatively or additionally, one or more driver programs for driving or operating another hardware device of the electronic device 101, for example, the input module 150, the sound output module 155, the display module 160, the audio module 170, the sensor module 176, the interface 177, the haptic module 179, the camera module 180, the power management module 188, the battery 189, the communication module 190, the SIM 196, or the antenna module 197.

The middleware 144 may provide various functions to the application 146 such that the application 146 uses functions or information provided by the one or more resources of the electronic device 101. The middleware 144 may include, for example, an application manager 201, a window manager 203, a multimedia manager 205, a resource manager 207, a power manager 209, a DB manager 211, a package manager 213, a connectivity manager 215, a notification manager 217, a location manager 219, a graphics manager 221, a security manager 223, a telephony manager 225, or a speech recognition manager 227.

The application manager 201 may manage, for example, a life cycle of the application 146. The window manager 203 may manage, for example, one or more graphical user interface (GUI) resources used for a screen. The multimedia manager 205 may, for example, identify one or more formats required for playing media files, and encode or decode a media file among the media files using a codec corresponding to a selected format. The resource manager 207 may manage, for example, a source code of the application 146 or a memory space of the memory 130. The power manager 209 may manage, for example, capacity, temperature, or power of the battery 189, and determine or provide information necessary for operations of the electronic device 101 using corresponding information. The power manager 209 may interwork with a basic input/output system (BIOS) (not shown) of the electronic device 101.

The DB manager 211 may generate, retrieve, or change a DB to be used by the application 147. The package manager 213 may manage, for example, installation or update of an application distributed in the form of a package file. The connectivity manager 215 may mange, for example, a wireless or direct connection between the electronic device 101 and an external electronic device. The notification manager 217 may provide a function for notifying a user of an occurrence of a preset event (e.g., an incoming call, a message, or an alarm). The graphics manager 221 may manage, for example, one or more graphical effects and related user interfaces (Uls) to be provided to a user.

The security manager 223 may provide, for example, system security or user authentication. The telephony manager 225 may manage, for example, a voice call function or video call function provided by the electronic device 101. The speech recognition manager 227 may transmit voice data (or audio data) of a user to the server 108 and receive, from the server 108, a command corresponding to a function to be performed in the electronic device 101 based on at least a portion of the audio data or text data converted based on at least a portion of the audio data. The middleware 144 may dynamically delete some of existing components or add new components. At least a portion of the middleware 144 may be included as a part of the OS 142 or implemented as separate software different from the OS 142.

The application 146 may include, for example, home 251, dialer 253, short message service (SMS)/ multimedia messaging service (MMS) 255, instant messaging (IM) 257, browser 259, camera 261, alarm 263, contacts 265, speech recognition 267, email 269, calendar 271, media player 273, album 275, watch 277, health 279 (e.g., measurement of bioinformation including, for example, an amount of physical exercise or blood sugar), or environmental information 281 (e.g., measurement of an atmospheric pressure, a humidity, or a temperature) applications. The application 146 may further include an information exchange application (not shown) for supporting information exchange between the electronic device 101 and an external electronic device. The information exchange application may include, for example, a notification relay application set to transfer preset information (e.g., a call, a message, or an alarm) to an external electronic device, or a device management application set to manage an external electronic device. The notification relay application may transfer, to an external electronic device, notification information corresponding to a preset event (e.g., reception of a mail) occurring in another application (e.g., the email application 269) of the electronic device 101. Alternatively or additionally, the notification application may receive notification information from an external electronic device and provide the received notification information to a user of the electronic device 101.

The device management application may control a power supply (e.g., turning on/off) or functions (e.g., brightness, resolution, or focus) of an external electronic device communicating with the electronic device 101 or some components (e.g., a display module or a camera module) of the external electronic device. Alternatively or additionally, the device management application may support the installation, deletion, or updating of an application operating in an external electronic device.

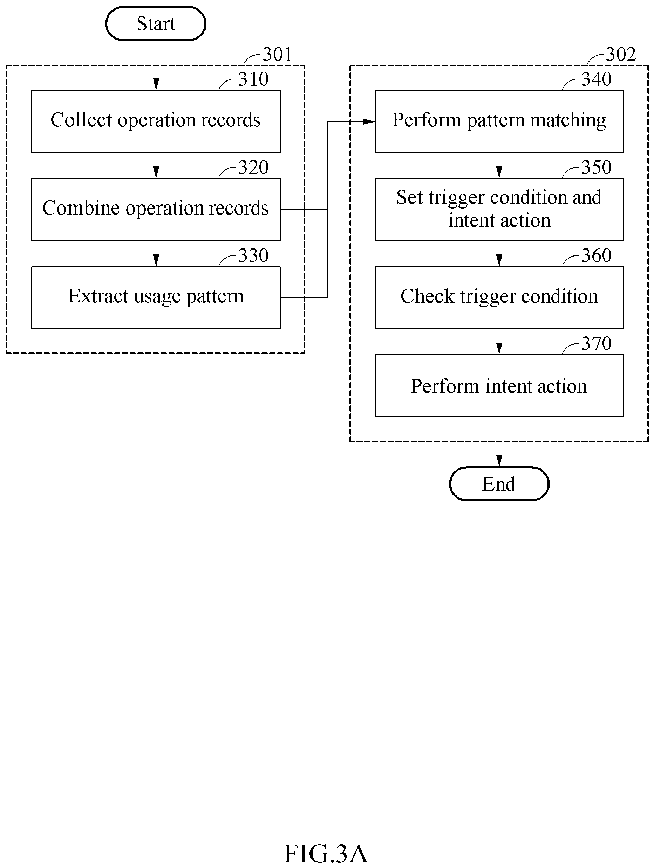

FIG. 3A is a flowchart illustrating an example prediction-based control operation according to an example embodiment. Operations 310 through 370 to be described hereinafter with reference to FIG. 3A may be performed in sequential order, but may not be necessarily performed in sequential order. For example, the order of operations 310 through 370 may be changed, and/or at least two of operations 310 through 370 may be performed in parallel. Operations 310 through 370 may be performed by at least one component (e.g., the processor 120) of the electronic device 101. In another embodiment, at least some (e.g., operations 310 through 330 in a prior stage 301) of operations 310 through 370 may be performed by a cooperative device (e.g., the electronic device 102, the electronic device 104, or the server 108).

Referring to FIG. 3A, in operation 310, operation records may be collected. An operation record may include at least one of a context record and a content record. The operation record may include data received from a sensor (e.g., the sensor module 176) and/or a program (e.g., the program 140), and data processed from the received data. The operation record may include log information.

The operation records may be collected periodically and/or aperiodically. The periodic collection may include collecting the operation records at preset time intervals. The aperiodic collection may include collecting the operation records based on a change and/or occurrence of at least one of a context, a content, and an action. The action may include a content action relating to a content, such as, for example, generating (or creating), opening, editing, and deleting the content. For example, when a location of the user is changed, a new content is generated, or an existing content is edited, an operation record may be collected.

The operation records may be stored in an operation record DB. The operation record DB may include a context DB for storing therein context records, and a content DB for storing therein content records. An action record may be included as a content action in a content record. The operation record will be described in greater detail below.

In operation 320, the operation records may be combined. Records of the same operation may be combined, and the combined operation records may be grouped as an operation record set. For example, when a first action relating to a first content occurs in a first context, records of the first context, the first content, and the first action may be combined for a first operation specified by the first context, the first content, and the first action, and a first operation record set may thereby be generated. The operation record set may be represented by Equation 1 below. [Equation 1] ${\left\{\left({content}_{i}, {context}_{i}, {action}_{i}\right)\right\}}_{i = 1}^{N}$

In Equation 1, (contentᵢ, contextᵢ, actionᵢ) indicates that actionᵢ is performed for contentᵢ in the situation of contextᵢ at time index i. N denotes the number of the stored operation record sets. The operation record sets may be stored in a combination DB. The operation record sets may be used as learning data or data that can be fed into a learning algorithm. The usage pattern of the user may be learned through the learning data, and a usage pattern DB may thereby be constructed.

In operation 330, a usage pattern may be extracted. The usage pattern may be extracted through repetition of related operations. For example, when there is a repeated pattern that a second operation is performed after a first operation, a usage pattern including the first operation and the second operation may be defined. In this example, the first operation may be referred to as a preceding operation, and the second operation may be referred to as a following operation. The preceding operation may be defined based on a preceding context, a preceding content, and a preceding action. The following operation may be defined based on a following context, a following content, and a following action. The usage pattern may be extracted from the combination DB. For example, when repetitive correspondence between an operation record set associated with the first operation and an operation record set associated with the second operation is detected in the combination DB, the usage pattern having the first operation and the second operation may be extracted from the combination DB.

According to an example embodiment, various operations associated with the same content may be extracted as a usage pattern. Various operations may be performed for a single content, and these operations may be associated with each other. For example, when an operation of generating, at home, a note listing food ingredients and an operation of opening the note at a market are repeated, a usage pattern having the note generating operation as the preceding operation and the note opening operation as the following operation may be extracted. For another example, when an operation of generating an image indicating a location of a vehicle in a parking lot of a shopping mall and an operation of opening the image after returning to the parking lot after shopping are repeated, a usage pattern having the image generating operation as a preceding operation and the image opening operation as a following operation may be defined. Content that is the target for each operation of a usage pattern may be referred to as a target content. The target content may be used to detect a usage pattern, and the usage pattern may thereby be detected more accurately and readily. The usage pattern may be registered in the usage pattern DB.

When the usage pattern is extracted, the usage pattern may be immediately registered in the usage pattern DB without confirmation by the user, or registered in the usage pattern DB after confirmation by the user. The user may check and manage (e.g., activate, inactivate, and delete) usage patterns registered in the usage pattern DB through a predetermined interface (e.g., usage pattern list).

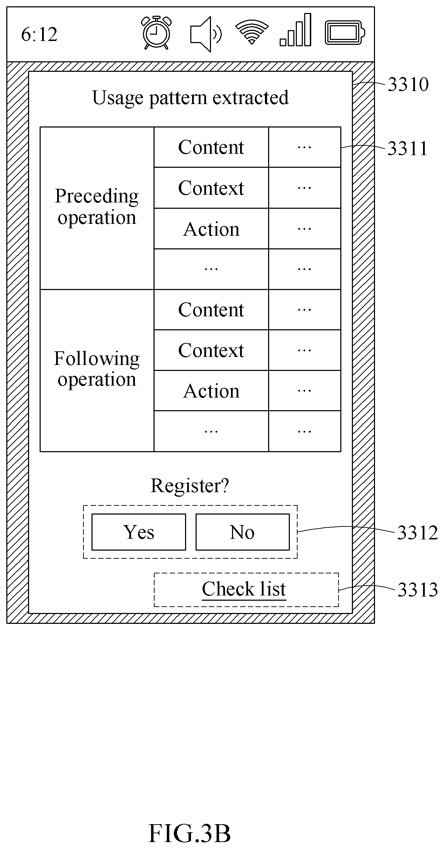

FIG. 3B is a diagram illustrating an example pattern registration screen according to an example embodiment. Referring to FIG. 3B, a pattern registration screen 3310 may include detailed information 3311 of an extracted usage pattern. The detailed information 3311 may be associated with a preceding operation and a following operation of the extracted usage pattern. For example, the detailed information 3311 may include at least one of a content, a context, and an action of each of the preceding operation and the following operation. The user may identify the extracted usage pattern through the detailed information 3311, and determine whether to register the usage pattern through a button in a check area 3312. A list link area 3313 may provide a graphical user interface (GUI) item that links to the usage pattern list, thereby allowing the user to check the usage pattern list.

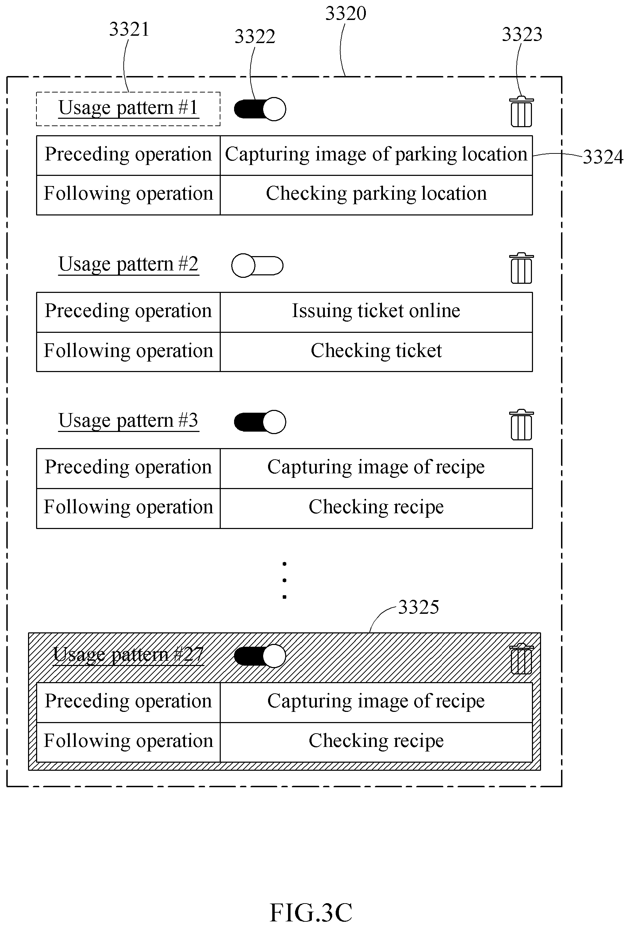

FIG. 3C is a diagram illustrating an example usage pattern list according to an example embodiment. The usage pattern list 3320 may show the registration information of various usage patterns (e.g., usage patterns #1 through #27) registered in the usage pattern DB. The registration information may include a usage pattern ID 3321, an activate button 3322, a delete button 3323, and detailed information 3324. The user may activate or inactivate each usage pattern through the activate button 3322. In FIG. 3C, usage pattern #1 is activated, and usage pattern #2 is inactivated. The user may delete a usage pattern through the delete button 3323. Additional information associated with a usage pattern may be provided when the user manipulates (e.g., tap) the detailed information 3324. A highlighter 3325 may be applied to a newly added usage pattern. For example, when a check button is pushed for registration of usage pattern #27 through the pattern registration screen 3310 of FIG. 3B, the usage pattern list 3320 may be displayed with the highlighter 3325 applied to the usage pattern #27.

When usage patterns are constructed through the prior stage 301, a usage pattern-based intent prediction may be performed through a matching stage 302. In the prior stage 301, the operations used for usage pattern registration may be referred to as a prior operation. In the matching stage 302, the operations used for pattern matching may be referred to as a query operation.

In operation 340, pattern matching may be performed. The pattern matching may include comparing pre-registered usage patterns and newly recognized usage pattern. The query operations may compare a new usage pattern with pre-registered usage patterns generated by the prior operations. In the query operation and the prior operation, each may be represented as an operation record set (content, context, action), and the pattern matching may be performed by comparing the query operation record set and the prior operation record set. For example, when a first action relating to a first content occurs in a first context, a first operation specified by the first context, the first content, and the first action may be recognized, and a first usage pattern having a preceding operation corresponding to the first operation may be detected from the usage pattern DB. In this example, when the first context, the first content, and the first action of the first operation correspond to a preceding context, a target content, and a preceding action of the preceding operation, the first operation may be matched to the preceding operation of the first usage pattern and the first usage pattern may be detected from the usage pattern DB.

For example, when a usage pattern having a preceding operation of generating a written note of food ingredients at home and a following operation of opening the note at a market is registered in the usage pattern DB, the operation corresponding to a preceding action relating to the target content of generating the note of food ingredients in the preceding context of being at home may be matched to the preceding operation of the usage pattern. In another example, when a usage pattern having a preceding operation of generating an image indicating a location of a vehicle in a parking lot of a shopping mall and a following operation of opening the image when returning to the parking lot after shopping is registered in the usage pattern DB, the operation corresponding to a preceding action relating to the target content of generating the image indicating the location of the vehicle in the preceding context of being in the parking lot may be matched to the preceding operation of the usage pattern.

In operation 350, when a usage pattern corresponding to a query operation is detected through the pattern matching, a trigger condition and an intent action may be set based on the usage pattern. The trigger condition and the intent action may be collectively referred to as an intent ticket. For example, when a matched usage pattern is detected from the usage pattern DB, the intent ticket may be issued based on the following operation of the usage pattern. The trigger condition may be set based on the following context of the following operation, and the intent action may be set based on the following action of the following operation. For example, in the case of a usage pattern having a following operation of opening the target note at a market, the following context of being at the market may be set as the trigger condition, and the action of opening the target note may be set as the intent action. In another example, in the case of a usage pattern having a following operation of opening the target image when returning to the parking lot after shopping, the following context of returning to the parking lot after shopping may be set as the trigger condition, and the action of opening the target image may be set as the intent action.

When the usage pattern corresponding to the query operation is detected through the pattern matching, the trigger condition and the intent action associated with the usage pattern may be immediately set without asking the user for confirmation, or may require user confirmation. The user may check and manage (e.g., delete) the settings of the trigger condition and the intent action by using a predetermined interface (e.g., usage pattern list).

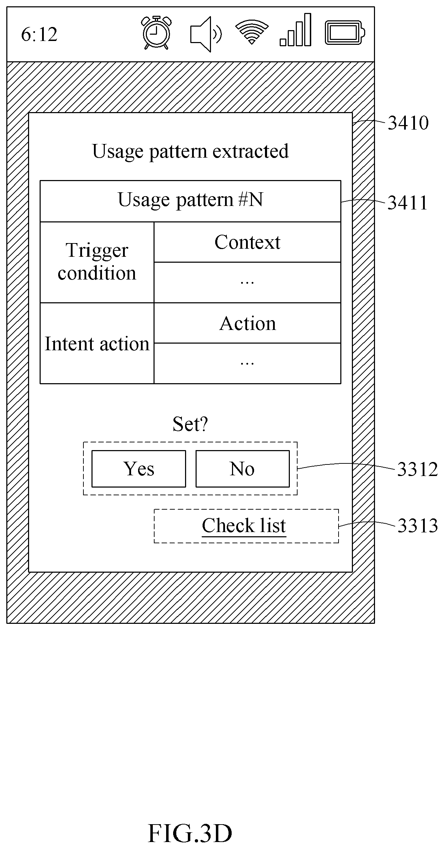

FIG. 3D is a diagram illustrating an example intent ticket setting screen according to an example embodiment. Referring to FIG. 3D, a setting screen 3410 may include detailed information 3411 of a usage pattern matched to a query operation. The detailed information 3411 may be associated with an intent ticket (a trigger condition and an intent action) according to the matched usage pattern. For example, the trigger condition may include at least one context of a following operation, and the intent action may include an action of the following operation. The user may identify the trigger condition and the intent action to be set through the detailed information 3411, and determine whether to set them through a button in a check area 3412. A list link area 3413 may provide a graphical user interface (GUI) item that links to the usage pattern list, thereby allowing the user to check the usage pattern list.

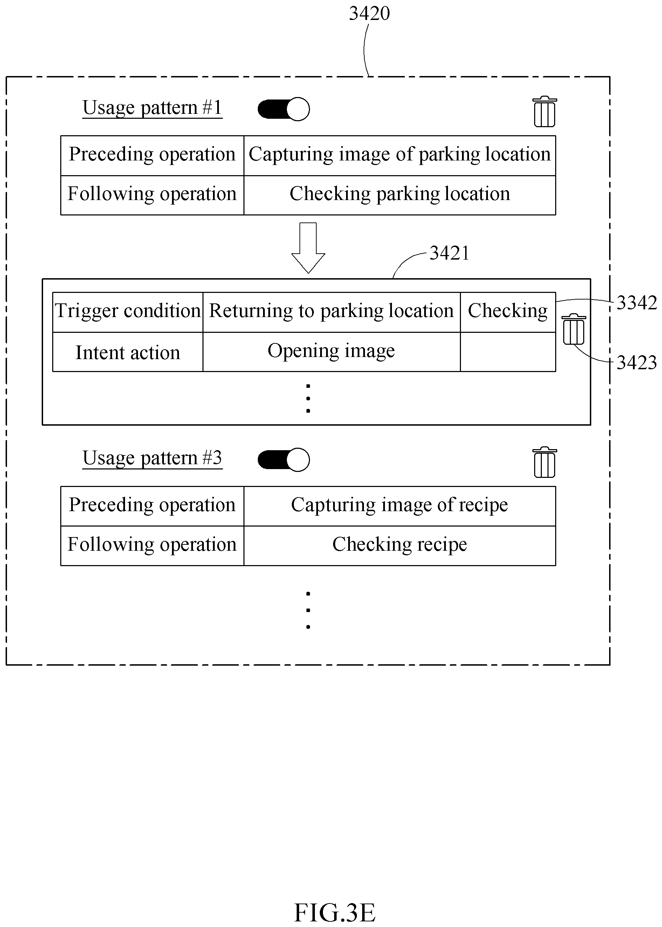

FIG. 3E is a diagram illustrating another example usage pattern list according to an example embodiment. A usage pattern list 3420 may include a ticket list 3421 of each usage pattern. The user may check the intent ticket (trigger condition and intent action) set for each usage pattern through the ticket list 3421. A ticket state 3342 may indicate the state of each intent ticket of usage pattern #1. For example, the ticket state 3342 may show the trigger condition indicating the context of returning to the parked location and the intent action indicating the action of opening an image. Additional information associated with the trigger condition and the intent action may be provided with additional user manipulation (e.g., tap) performed on the ticket state 3342. The ticket state 3342 may include information as to whether the trigger condition is satisfied. For example, when whether the trigger condition is satisfied is being checked, a message "checking" may be displayed on the ticket state 3422. In this example, when the trigger condition is satisfied, a message "satisfied" may be displayed on the ticket state 3422. The user may delete a set item through a delete button 3423. A plurality of intent tickets may be issued based on a single usage pattern, and in such a case, a plurality of state items based on the intent tickets may be displayed on the ticket list 3421.

In operation 360, the trigger condition may be checked. In operation 370, the intent action may be performed as the trigger condition is satisfied. The intent action may include an action of displaying information, an action of executing an application, and an action of sharing details. For example, when the trigger condition of being at a market is satisfied, the intent action of opening a target note may be performed. In another example, when the trigger condition of returning to the parking lot after shopping is satisfied, the intent action of opening a target image may be performed. The intent action may be immediately performed in response to the trigger condition being satisfied, or be performed when the user confirms that the trigger condition is satisfied. For example, when the trigger condition is satisfied, the user may be requested to confirm whether to perform the intent action, and the intent action may be performed in response to the user confirmation.

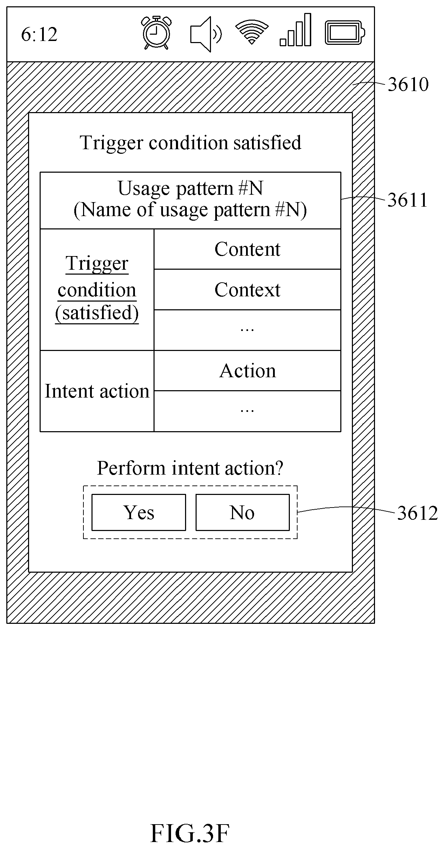

FIG. 3F is a diagram illustrating an example intent action performing screen according to an example embodiment. Referring to FIG. 3F, an intent action performing screen 3610 may include detailed information 3611 of an intent ticket. The detailed information 3611 may include a state (e.g., "checking" or "satisfied") of a trigger condition. The user may identify the state of the trigger condition and an intent action through the detailed information 3611, and determine whether to perform the intent action through a button in a check area 3612.

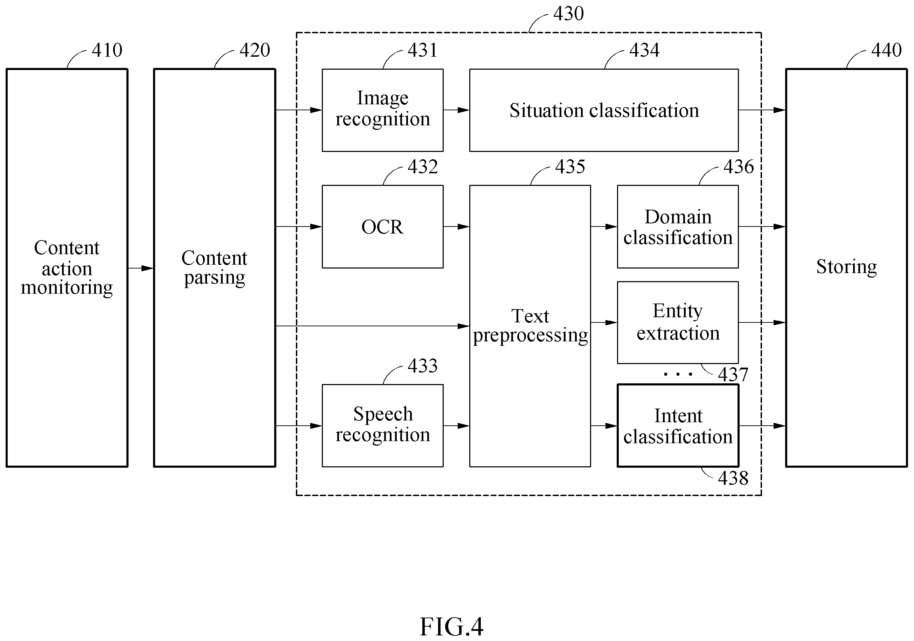

FIG. 4 is a diagram illustrating an example of collecting a content record according to an example embodiment. Operations 410 through 440 to be described hereinafter with reference to FIG. 4 may be performed in sequential order, but not be necessarily performed in sequential order. For example, the order of operations 410 through 440 may be changed, and/or at least two of operations 410 through 440 may be performed in parallel. Operations 410 through 440 may be performed by at least one component (e.g., the processor 120) of the electronic device 101, or in another embodiment at least some of operations 410 through 440 may be performed by a cooperative device (e.g., the electronic device 102, the electronic device 104, and the server 108).

Referring to FIG. 4, in operation 410, a content action may be monitored. The content action may include a content operation to be performed on a content, for example, generating, opening, editing, and deleting the content. A change may occur in the content based on the content action. Based on such a change in the content, the content action may be detected. In operation 420, the content corresponding to the detected content action may be parsed. Through this content parsing, at least one of image information, text information, and voice information of the content may be extracted.

In operation 430, the information extracted from the content may be analyzed. For the analysis in operation 430, machine learning may be used. Through image recognition in operation 431 and situation classification in operation 434, a situation corresponding to the image information of the content may be inferred. Through the image recognition, a recognition result corresponding to the image information may be generated, and a situation corresponding to the recognition result may be determined through the situation classification. For example, from image content obtained by capturing an image of a parking lot of a shopping mall, the situation of arriving at the shopping mall and parking in the parking lot may be inferred. The recognition result obtained in operation 431 for the image recognition and/or the classification result obtained in operation 434 for the situation classification may be stored in a content DB in operation 440.

Through optical character recognition (OCR) in operation 432, the text information may be extracted from the image information. Through speech recognition in operation 433, the text information may be extracted from the voice information. In operation 435, text preprocessing may be performed on the text information of the content, the result of the OCR, and the result of the speech recognition. Based on the result of the preprocessing, at least one of operation 436 for domain classification, operation 437 for entity extraction, and operation 438 for intent classification may be performed.

The result of the content analysis performed in operation 430 may be stored as a content record in the DB. The content record may represent information associated with the content which is a target for which operations are recorded. The content record may include, for example, a content ID, a content type, a content entity, a content situation, a content intent, and a content action. The content ID, the content type, and the content action may correspond to basic content data. The content entity, the content situation, and the content intent corresponding to the result of the content analysis may correspond to high-dimensional processed content data. The processed content data may be stored as the content record in the content DB along with the basic content data.

The content type may include an Internet record (e.g., uniform resource locator (URL)), a search query, a document file (e.g., note, text, pdf, ppt, excel), an image file (e.g., jpg, png, gif), a messaging record (e.g., SMS, MMS, messenger-based message transmission and reception, or dialog record), a call record (e.g., outgoing and incoming call records), contacts, schedule, and alarm. The content entity may represent detailed information in the content. The content entity may include information on different categories based on the content type. For example, the content of a note type may indicate the topic of the corresponding note, the content of an alarm type may indicate an alarm time and alarm on/off information, and the content of an image type may indicate information included in the corresponding image as determined through machine learning. These content records described above may be provided merely as examples, and at least some of the items may be omitted or another item may be added.

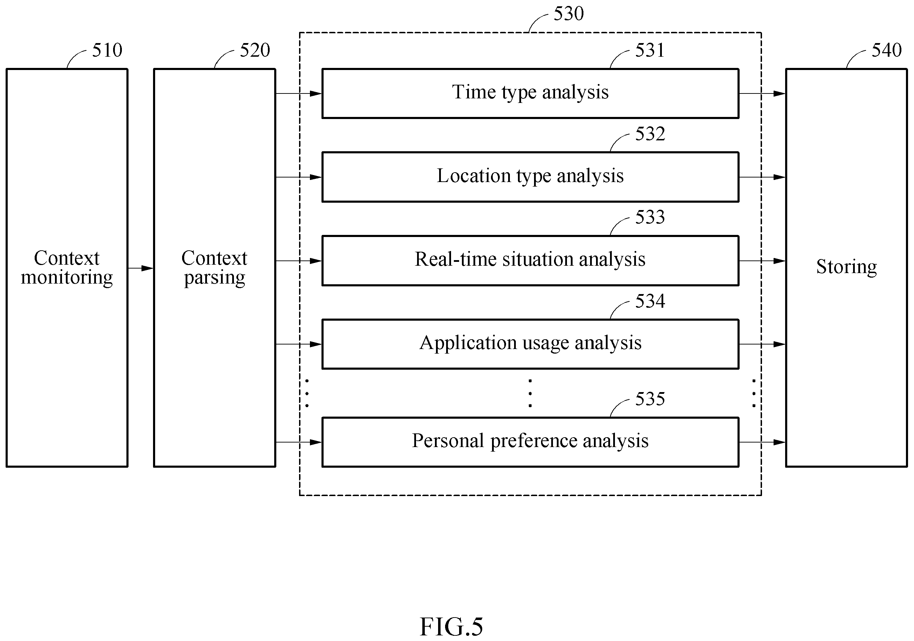

FIG. 5 is a diagram illustrating an example of collecting a context record according to an example embodiment. Operations 510 through 540 to be described hereinafter with reference to FIG. 5 may be performed in sequential order, but not be necessarily performed in sequential order. For example, the order of operations 510 through 540 may be changed, and/or at least two of operations 510 through 540 may be performed in parallel. Operations 510 through 540 may be performed by at least one component (e.g., the processor 120) of the electronic device 101, or in another embodiment at least some of operations 510 through 540 may be performed by a cooperative device (e.g., the electronic device 102, the electronic device 104, and the server 108).

Referring to FIG. 5, in operation 510, a context may be monitored. The context may include, for example, a time, a location, an application usage history, an Internet usage history, and network connection information, which may correspond to basic context data. The context may correspond to information that is already collected when a content is generated and used and is ready to be used. The time may include time information including, for example, date, day, hour, minute, and second. The location may include information including, for example, latitude, longitude, a point of interest (POI), and a type of business. The Internet usage history may include, for example, an URL and a search query, and the network connection information may include a record of connecting a network through, for example, Wi-Fi, Bluetooth, a mobile network, and roaming.

In operation 520, when a change in the context is detected, the context may be parsed. Through the context parsing, a type of the context may be classified. In operation 530, the context may be analyzed. Through an analysis of the basic context data, processed context data may be generated. For the analysis in operation 530, machine learning may be used. Through an analysis of time type in operation 531, a type to which the time of the context belongs may be determined. The time type may include, for example, morning, afternoon, evening, time for going to the office, working time, time for leaving the office, break time, weekday, weekend, and holiday or vacation. Through an analysis of location type in operation 532, a type to which the location of the context belongs may be determined. The location type may include, for example, a house, an office, a school, a gym, and a lodging. Each location type may correspond to a personal location of a user. Through an analysis of real-time situation in operation 533, an analysis of application usage in operation 534, and an analysis of personal preference in operation 535, high-dimensional processed context data may be generated from the basic context data. For example, through the situation analysis, various situations, for example, the situation of arriving at a market for shopping, the situation of parking at a shopping mall, the situation of returning to a parking lot after shopping, the situation of going on travel, and the situation of returning from travel, may be recognized. In addition, a frequently used application, a device waiting for Bluetooth connection, a preferred search query, and a preferred web page may be estimated.

The result of the context analysis performed in operation 530 may be stored as a context record in a DB. The context record may represent information of a context for which operation records are collected. The context record may include the basic context data (e.g., time, location, application usage history, Internet usage history, and network connection information) and the high-dimensional processed context data corresponding to a result of analyzing the basic context data. The basic context data and the processed context data may be stored as the context record in a context DB. The context records listed above may be provided merely as examples, and at least some of the items may be omitted or another item may be added.

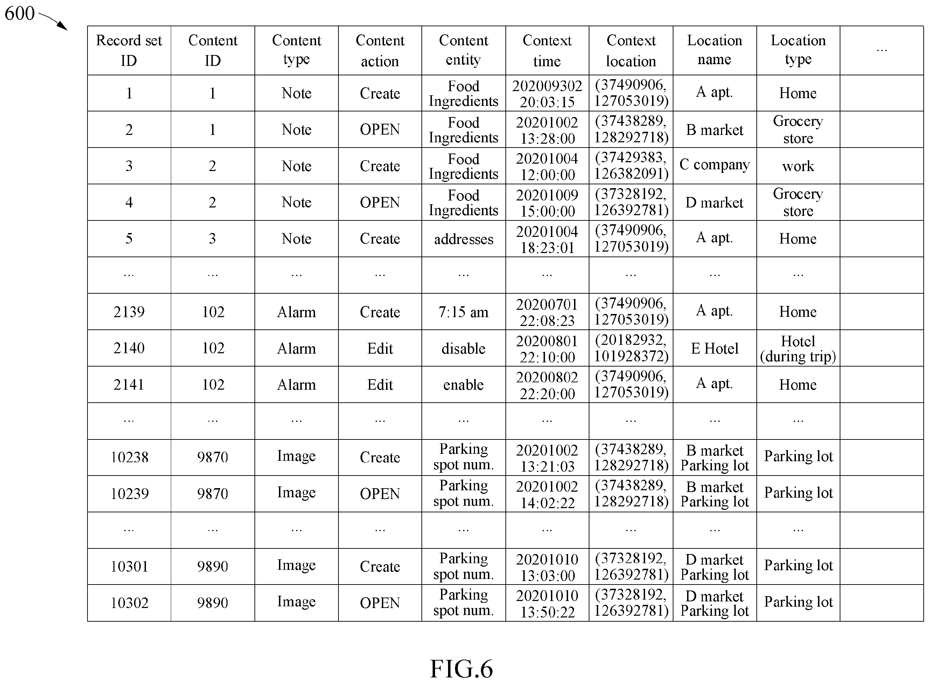

FIG. 6 is a diagram illustrating an example data structure of a combination DB according to an example embodiment. As described above, an operation record set may be generated through a combination of operation records including a content record and a context record, and operation record sets may be stored in a combination DB. A table 600 of FIG. 6 may show an example data structure of the combination DB.

The rows in the table 600 may include record items of combined record sets including a record set ID, a content ID, a content type, a content action, a content entity, a context time, a context location, a location name, and a location type. The content ID, the content type, and the content action may correspond to basic content data. The content entity may correspond to processed content data. The context time, the context location, and the location name may correspond to basic context data. The location type may correspond to processed context data. These items listed above may be provided merely as examples, and at least some of the items may be omitted or another item may be added.

A single ID may be assigned to a single combined record set, and each combined record set may be uniquely identified by the record set ID. The content ID may identify a target content associated with a combined record set. For the target content, different contexts and/or different content actions may be generated. Thus, different combined record sets may have the same content ID. For example, a first combined record set and a second combined record set may include records associated with the content ID of 1. Here, the combined record set of which record set ID is K may be referred to as a Kth combined record set.

For example, as illustrated, the first combined record set may represent the operation of generating target content (e.g., a note of food ingredients) at home (e.g., A apartment building), and the second combined record set may represent the operation of opening the target content (the note of food ingredients) at a grocery store (e.g., B market). A third combined record set may represent the operation of generating target content (e.g., a note of food ingredients) in an office (e.g., C company), and a fourth combined record set may represent the operation of opening the target content (the note of food ingredients) at a grocery store (e.g., D market). A fifth combined record set may represent the operation of generating target content (e.g., a note of addresses) at home (e.g., A apartment building).

A 2139th combined record set may represent the operation of generating target content (e.g., alarm) at home (e.g., A apartment building), and a 2140th combined record set may represent the operation of inactivating (or disabling as illustrated) the target content (the alarm). A 2141st combined record set may represent the operation of activating (or enabling as illustrated) the target content (the alarm) after coming back home (A apartment building).

A 10238th combined record set may represent the operation of generating target content (e.g., an image showing a parking spot number) in a parking lot (e.g., the parking lot of B market), and a 10239th combined record set may represent the operation of opening the target content (the image showing the parking spot number) when returning to the parking lot (the parking lot of B market) after a predetermined time period elapses. A 10301st combined record set may represent the operation of generating target content (e.g., an image showing a parking spot number) in a parking lot (e.g., the parking lot of D market), and a 10302nd combined record set may represent the operation of opening the target content (the image showing the parking spot number) when returning to the parking lot (the parking lot of D market) after a predetermined time period elapses.

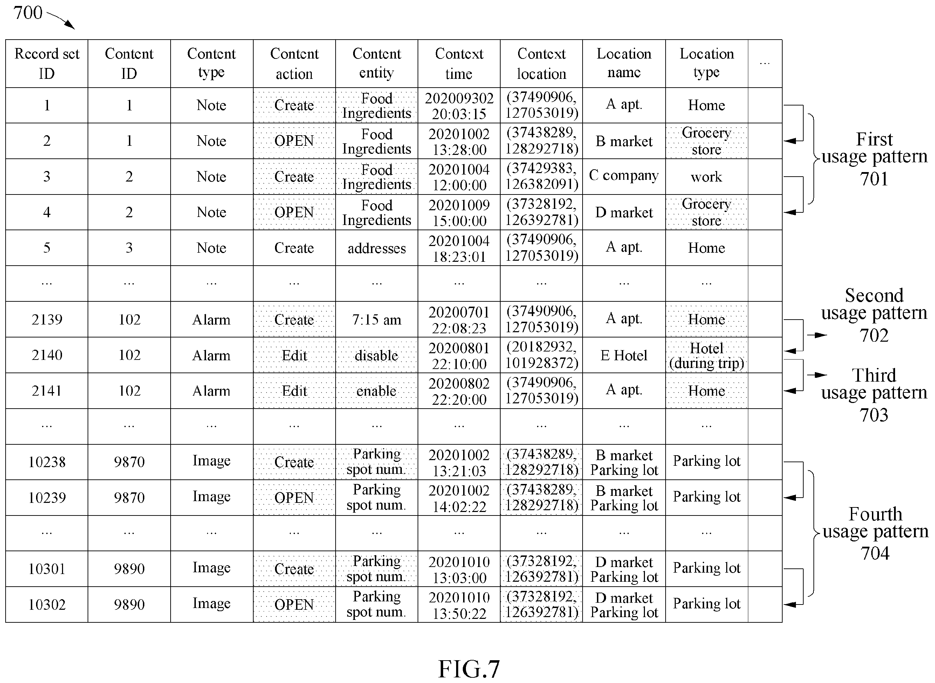

FIG. 7 is a diagram illustrating an example of extracting a usage pattern from a combination DB according to an example embodiment. Referring to FIG. 7, a table 700 may include the same operation record sets as illustrated in the table 600. In the table 700, operation record sets associated with usage patterns are highlighted. A usage pattern may be extracted from a combination DB based on the repetition of candidate record sets that form the usage pattern with a preceding operation and a following operation among prior operation record sets in the combination DB. The extracted usage pattern may be added to a usage pattern DB.

For example, as illustrated, the first combined record set and the second combined record set may correspond to the operation of generating a note of food ingredients at home and the operation of opening the note at a grocery store. The third combined record set and the fourth combined record set may correspond to the operation of generating a note of food ingredients in an office and the operation of opening the note at a grocery store. The first through fourth combined record sets may correspond to a specific pattern of generating a note of food ingredients in a primary living or working space such as a house and an office and checking the note at a grocery store. A first usage pattern 701 may be defined based on the repetition of the pair of the first combined record set and the second combined record set and the pair of the third combined record set and the fourth combined record set. The first usage pattern 701 may include the preceding operation of generating a note of food ingredients or equivalent content in a house, office, or at equivalent locations, and the following operation of opening the note at a grocery store or equivalent locations.

For example, as illustrated, the 2139th combined record set and the 2140th combined record set may correspond to the operation of generating an alarm at home and the operation of inactivating the alarm at a hotel during travel. The 2140th combined record set and the 2141st combined record set may correspond to the operation of inactivating the alarm at the hotel during the travel and the operation of activating the alarm after returning home. In a similar or same way as the first usage pattern 701 is defined, based on the repetition of these combined record sets, a second usage pattern 702 may be defined based on the 2139th combined record set and the 2140th combined record set, and a third usage pattern 703 may be defined based on the 2140th combined record set and the 2141st combined record set. The second usage pattern 702 may include the preceding operation of generating an alarm at home or equivalent locations, and the following operation of inactivating the alarm at a hotel or equivalent locations. The third usage pattern 703 may include the preceding operation of inactivating the alarm at a hotel or equivalent locations at a time corresponding to travel or the like, and the following operation of activating again the alarm at home or equivalent locations after a time corresponding to when the travel or the like has ended.

For example, as illustrated, the 10238th combined record set and the 10239th combined record set may correspond to the operation of generating an image showing a parking spot number in a parking lot of a market and the operation of opening the image when returning to the parking lot of the market after a predetermined time period elapses. In addition, the 10301st combined record set and the 10302nd combined record set may correspond to corresponding operations associated with the parking lot of another market. A fourth usage pattern 704 may be defined based on the repetition of these operations. The fourth usage pattern 704 may include the preceding operation of generating an image showing a parking spot number in a parking lot of a market, and the following operation of checking the image when returning to the parking lot of the market after a predetermined time period for shopping has elapsed.

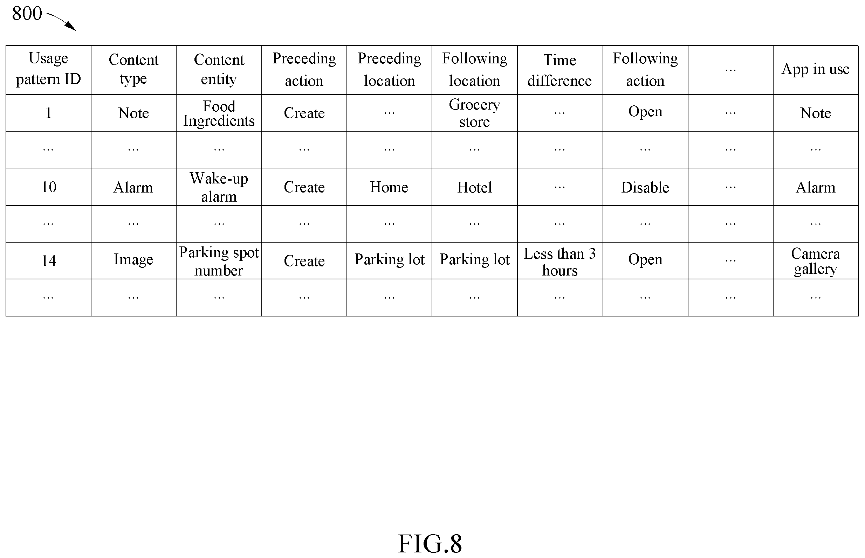

FIG. 8 is a diagram illustrating an example data structure of a usage pattern DB according to an example embodiment. A table 800 of FIG. 8 may indicate an example data structure of a usage pattern DB based on pattern extraction described above with reference to FIG. 7. The first usage pattern in the table 800 may correspond to the first usage pattern 701 in the table 700, the 10th usage pattern in the table 800 may correspond to the second usage pattern 702 in the table 700, and the 14th usage pattern in the table 800 may correspond to the fourth usage pattern 704 in the table 700.

The first row in the table 800 may include items of usage patterns including a usage pattern ID, a content type, a content entity, a preceding action, a preceding location, a following location, a time difference, a following action, and an application in use. A usage pattern may include a preceding operation and a following operation. The preceding operation may be defined by a preceding action and/or a preceding context for a target content, and the following operation may be defined by a following action and/or a following context for the target content. In these items, the content type, the content entity, and the application in use may indicate the target content, and the preceding location may indicate the preceding context and the following location may indicate the following context. The time difference, which is a difference between a preceding time and a following time, may indicate the preceding context and/or the following context. The items listed above may be provided merely as examples, and at least some of the items may be omitted or another item may be added. For example, operation record items described above may be additionally used to indicate the preceding operation and/or the following operation.

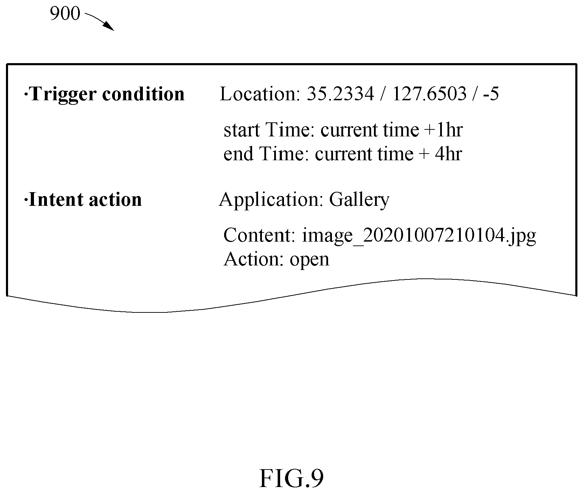

FIG. 9 is a diagram illustrating an example intent ticket according to an example embodiment. As described above, when a specific usage pattern matched to a query operation is detected among pre-registered usage patterns, a trigger condition and an intent action may be set based on the usage pattern. An intent ticket 900 may include the trigger condition and the intent action.

The trigger condition may define a condition for performing the intent action. The trigger condition may include, for example, a location condition (e.g., at home, in an office, at a hotel, in a parking lot of a market, etc.), a context condition (e.g., situation information indicating a situation, for example, being on way to work, traveling, working, etc.), a time condition (e.g., a start and/or end of a time interval during which the condition is applied), a device connection condition (e.g., connection to a device), and an application condition (e.g., execution and/or end of an application). The trigger condition may be determined based on the following context of the matched usage pattern. The intent action may define an action for a target content to be performed as the trigger condition is satisfied. The intent action may be determined based on the target content and the following action of the matched usage pattern.

For example, there may be a usage pattern including a preceding operation of capturing an image of a parking spot number in a parking lot and a following operation of checking the image when returning to the parking lot after a predetermined time elapses. In this example, when the user enters the parking lot and captures an image of a parked location, image information indicating a plurality of lined vehicles may be analyzed from the captured image and the parking lot may thereby be recognized, and the parking spot number may be extracted through OCR. Through a context in which Bluetooth connection with a vehicle is canceled, a parking situation may be recognized. Based on this content and/or context analysis, the usage pattern may be recognized.

In this example, the preceding operation may be {content (parking lot and number image), context (parking), action (create)}, and the following operation may be {location (latitude, longitude, elevation)}, time (current time + 1 to 4 hours), app (Gallery), action (open)}. The preceding operation may correspond to the operation of generating content including the parking lot and number image in the parking situation, and the following operation may correspond to the operation of opening the content with Gallery at the parked location (latitude, longitude, elevation) at the current time + 1 to 4 hours. The current time may correspond to a point in time at which the preceding operation is performed. As the usage pattern is detected, the pattern registration screen illustrated in FIG. 3B may be displayed, and the usage pattern may be registered after confirmation by the user.

After the usage pattern is registered, pattern matching may be performed based on the content and/or context analysis. When a query operation is matched to the preceding operation of the usage pattern, an intent ticket may be issued based on the following operation of the usage pattern. Through the pattern matching, the setting screen illustrated in FIG. 3B may be displayed, and the intent ticket may be issued after confirmation by the user. For example, the intent ticket may include a trigger condition that specifies a time condition (e.g., time interval during which the condition is applied) and a location condition (e.g., around the parking lot), and an intent action that specifies an application in use (e.g., Gallery), a target content (e.g., the parking lot image), and a following action (e.g., open). The trigger condition and the intent action may be indicated as in Table 1 below.

**[Table 1]**

| | |
|---|---|
| Trigger condition | Location: 35.2334/127.6503/-5 |
| | Start time: current time + 1 hour |
| | End time: current time + 4 hours |
| Intent action | Application in use: Gallery |
| | Content: image_20201007210104.jpg |
| | Action: open |

For example, there may be a usage pattern including a preceding operation of issuing a movie ticket online and a following operation of checking the ticket image in a movie theater on the reserved date of the movie ticket. In this example, when the user issues or purchases the movie ticket, the ticket image may be analyzed to recognize the image as a document of ticket or receipt type. In addition, a theater number, a date, a time, a location, and a seat number may be extracted through OCR. The situation of reserving for a movie may be recognized through a record of using a movie-related application and a record of accessing a URL of a movie reservation page. In this example, the preceding operation may be {content (ticket, receipt image), context (movie search), action (create)}, and the following operation may be {location (extracted location), time (extracted time), app (Gallery), action (open)}. The preceding operation may correspond to the operation of generating content of the ticket and receipt image in the situation of searching for a movie, and the following operation may correspond to the operation of opening the content through an application (movie-related application), Gallery, at the extracted location and at the extracted time. As the usage pattern is detected, the pattern registration screen illustrated in FIG. 3B may be displayed, and the usage pattern may be registered after confirmation by the user.

After the usage pattern is registered, pattern matching may be performed based on a content and/or context analysis. When a query operation (e.g. location of the user coincides with the location of the theater) is matched to the preceding operation of the usage pattern, an intent ticket may be issued based on the following operation of the usage pattern. Through the pattern matching, the setting screen illustrated in FIG. 3D may be displayed, and the intent ticket may be issued after confirmation by the user. For example, the intent ticket may include a trigger condition that specifies a time condition (e.g., a play time extracted from the ticket image) and a location condition (e.g., the location of the movie theater extracted from the ticket image), and an intent action that specifies an application in use (e.g., Gallery), a target content (e.g., the ticket image), and a following action (e.g., open). The trigger condition and the intent action may be indicated as in Table 2 below.

**[Table 2]**

| | |
|---|---|
| Trigger condition | Location: S Cinema(35.2130/127.6501) |
| | Start time: 2020.10.12 13:00 |
| | End time: 2020.10.12 15:00 |
| Intent action | Application in use: Gallery |
| | Content: image_20201007220101.jpg |
| | Action: open |

For example, there may be a usage pattern associated with an operation of capturing an image of a recipe. For example, there may be a usage pattern including a preceding operation of generating an image including a recipe and a following operation of checking the recipe image at a market. The recipe image may be generated as a screenshot of the recipe online or by capturing an image of the recipe in a physical cookbook. When the image is generated, an analysis of the image may be performed to recognize the entity as a food-related item, and ingredients for the recipe may be extracted through OCR. When the content is generated, text analysis may be performed to recognize the food item and extract the ingredients for the recipe. The situation of generating food content may be recognized through a history of searching the Internet for food recipes. In this example, the preceding operation may be {content (food image), context (food recipe search), action (create)}, and the following operation may be {location (market), time (current time + 2 hours to 7 days), app (Gallery), action (open)}. The preceding operation may correspond to the operation of generating content of the food image in the situation of searching for the food recipe, and the following operation may correspond to the operation of opening the content with Gallery at the market after a predetermined time elapses. As the usage pattern is detected, the pattern registration screen illustrated in FIG. 3B may be displayed, and the usage pattern may be registered after confirmation by a user.

After the usage pattern is registered, pattern matching may be performed based on a content and/or context analysis. When a query operation is matched to the preceding operation of the usage pattern, an intent ticket may be issued based on the following operation of the usage pattern. Through the pattern matching, the setting screen illustrated in FIG. 3D may be displayed, and the intent ticket may be issued after confirmation by the user. For example, the intent ticket may include a trigger condition that specifies a time condition (e.g., a time interval during which the condition is applied) and a location condition (e.g., a market nearby and a frequently visited market), and an intent action that specifies an application in use (e.g., Gallery), a target content (e.g., a food ingredient content), and a following action (e.g., open). The trigger condition and the intent action may be indicated as in Table 3 below.

**[Table 3]**

| | |
|---|---|
| Trigger condition | Location: market (35.2130/127.6501) |
| | Start time: current time + 2 hours |
| | End time: current time + 7 days |
| Intent action | Application in use: Gallery |
| | Content: image_20201008120204.jpg |
| | Action: open |

For another example, when an image of the online page or the cookbook is captured, there may be a following operation of automatically storing the image of the recipe in an application, such as the Note application. In this example, the preceding operation may be {content (food image), context (food recipe search), action (create)}, and the following operation may be {context (Internet app close), app (Note), action (write), content (extracted text)}. The preceding operation may correspond to the operation of generating the food image in a situation of searching for the food recipes, and the following operation may correspond to the operation of writing the extracted text in the Note application after the Internet application is closed. In this example, the intent ticket may include a trigger condition that specifies a situation condition (e.g., closing the Internet), and an intent action that specifies an application in use (e.g., Note), a target content (e.g., a recipe text to be extracted), and a following action (e.g., write). The trigger condition and the intent action may be indicated as in Table 4 below.

**[Table 4]**

| | |
|---|---|
| Trigger condition | Situation: Internet close |
| Intent action | Application in use: Note |
| | Content: extracted recipe text |
| | Action: write |

For example, there may be a usage pattern associated with an operation of receiving a scheduling message. For example, there may be a usage pattern including a preceding operation of receiving a scheduling message and a following operation of storing a schedule (in Calendar, for example). In this example, the scheduling situation may be recognized through a result of text analysis performed on the scheduling message, and the situation may include, for example, the situation of receiving the message after reservation by phone and/or the Internet and the situation of receiving the message after boarding a vehicle at a location that is not a house and/or office (e.g., receiving the scheduling message for reserving a visit at a location such as a hospital). From the scheduling message, a schedule (e.g., date, time, and location) may be extracted. The preceding operation may be {content (message including date, time, and location}, context (before boarding a vehicle at another location after calling), action (receive)}, and the following operation may be {app (Calendar), action (write), content (extracted date, time, location)}. In this example, the preceding operation may correspond to the operation of receiving a message content including a schedule (date, time, and location) in the situation of boarding a vehicle at a location that is not home or office after making a phone call, and the following operation may correspond to the operation of writing an extracted schedule in the application Calendar. As the usage pattern is detected, the pattern registration screen illustrated in FIG. 3B may be displayed, and the usage pattern may be registered after confirmation by a user.

When the current operation is matched to the usage pattern based on a context analysis, an intent ticket may be issued based on the following operation of the usage pattern. Through pattern matching, the setting screen illustrated in FIG. 3D may be displayed, and the intent ticket may be issued after confirmation by the user. For example, when accurate location is not readily recognized from the content (e.g., a schedule on Calendar) in the case of storing schedules, POI and/or type of business of location information recognized through a context may be used. The intent ticket may include an intent action that specifies an application in use (e.g., Calendar), a target content (e.g., an extracted schedule), and a following action (e.g., write). In this case, the intent ticket may not include a trigger condition, and the intent action may be performed as the preceding operation is detected. The trigger condition and the intent action may be indicated as in Table 5 below.

**[Table 5]**

| | |
|---|---|
| Trigger condition | None |
| Intent action | Application in use: Calendar |
| | Content: extracted date/time/location |
| | Action: write |

For another example, there may be a usage pattern including a following operation of boarding a vehicle around the a particular schedule (e.g., 1 or 2 hours before the schedule) and setting, as the location for the schedule, the destination for a navigation system of the vehicle. Such a situation of boarding the vehicle may be recognized through Bluetooth connection with the vehicle. In this example, the preceding operation may be {content (text message including a date, a time, and a location), context (before boarding the vehicle at another location after calling), action (receive)}, and the following operation may be {location (extracted location), time (extracted time - 1 to 2 hours), app (Navigation), action (search)}. In this example, the preceding operation may correspond to the operation of receiving message content including the schedule (date, time, and location) in the situation of boarding the vehicle at a location that is not home or office after making a phone call, and the following operation may correspond to the operation of searching for the location for the schedule through a Navigation application around the time for the schedule. In this example, the intent ticket may include a trigger condition that specifies a context condition (e.g., boarding the vehicle) and a time condition (e.g., around an extracted time), and an intent action that specifies an application in use (e.g., Navigation), a target content (e.g., an extracted location), and a following action (e.g., search). The trigger condition and the intent action may be indicated as in Table 6 below.

**[Table 6]**

| | |
|---|---|
| Trigger condition | Context: boarding a vehicle (Bluetooth connection) |
| | Start time: extracted time - 2 hours |
| | End time: extracted time - 0.5 hours |
| Intent action | Application in use: Navigation |
| | Content: extracted location |
| | Action: search |

For example, there may be a usage pattern associated with an operation of capturing an image of travel information. For example, there may be a usage pattern including a preceding operation of capturing an image of travel information on the Internet and a following operation of storing the travel information (in Note, for example). In this example, the situation of searching for the travel information may be recognized through an Internet search history, and the analysis of the captured image may be performed to extract, as content, the country and region of the travel, special product and food of the travel destination, and a travel agency. The usage pattern may be recognized through such content and/or context analysis. For example, the preceding operation may be {content (travel, food, restaurant related image), context (Internet app 'travel' and 'restaurants' search), action (create)}, and the following operation may be {context (Internet app close), app (Note), action (write), content (extracted text)}. The preceding operation may correspond to the operation of generating a travel, food, and restaurant-related image content in the situation of searching for 'travel' and 'restaurants' through an Internet application, and the following operation may correspond to the operation of writing, in the Note application, text extracted from the content after closing the Internet application. As the usage pattern is detected, the pattern registration screen illustrated in FIG. 3B may be displayed, and the usage pattern may be registered after confirmation by a user.

After the usage pattern is registered, pattern matching may be performed based on the content and/or context analysis. When a query operation is matched to the preceding operation of the usage pattern, an intent ticket may be issued based on the following operation of the usage pattern. Through the pattern matching, the setting screen illustrated in FIG. 3D may be displayed, and the intent ticket may be issued after confirmation by the user. For example, the intent ticket may include a trigger condition that specifies a context condition (e.g., Internet close) and an intent action that specifies an application in use (e.g., Note), a target content (e.g., an extracted text), and a following action (e.g., write). The trigger condition and the intent action may be indicated as in Table 7 below.

**[Table 7]**

| | |
|---|---|
| Trigger condition | Internet close |
| Intent action | Application in use: Note |
| | Content: extracted date/time/location |
| | Action: write |

For another example, there may be a usage pattern including a preceding operation of capturing an image of travel information and a following operation of checking the information at a travel destination. The situation of searching for the travel information may be recognized through an Internet search history, and the analysis of the captured image may be performed to extract, as a content, the country and region of the travel, special product and food of the travel destination, and a travel agency. In this example, the preceding operation may be {content (travel, food, restaurant-related image), context (Internet app 'travel' and 'restaurants' search), action (create)}, and the following operation may be {location (extracted location), context (traveling), time (current time + 1 day to 3 months), app (Gallery), action(open)}. The preceding operation may correspond to the operation of generating a travel, food, and restaurant-related image content in the situation of searching for 'travel' and 'restaurants' through an Internet application, and the following operation may correspond to the operation of opening the image content through the application Gallery, at a location extracted from the image content and at a current time + 1 day to 3 months during the travel.

After the usage pattern is registered, pattern matching may be performed based on a content and/or context analysis. When a query operation is matched to the preceding operation of the usage pattern, an intent ticket may be issued based on the following operation of the usage pattern. The intent ticket may include a trigger condition that specifies a context condition (e.g., during the travel), a location condition (e.g., an extracted location), and a time condition (e.g., a period of the travel), and an intent action that specifies an application in use (e.g., Gallery), a target content (e.g., an image content), and a following action (e.g., open). The trigger condition and the intent action may be indicated as in Table 8 below.

**[Table 8]**

| | |
|---|---|
| Trigger condition | Context: travelling |
| | Location: extracted location |
| | Start time: current time + 1 day |
| | End time: current time + 3 months |
| Intent action | Application in use: Gallery |
| | Content: image_20201009120202.jpg |
| | Action: open |

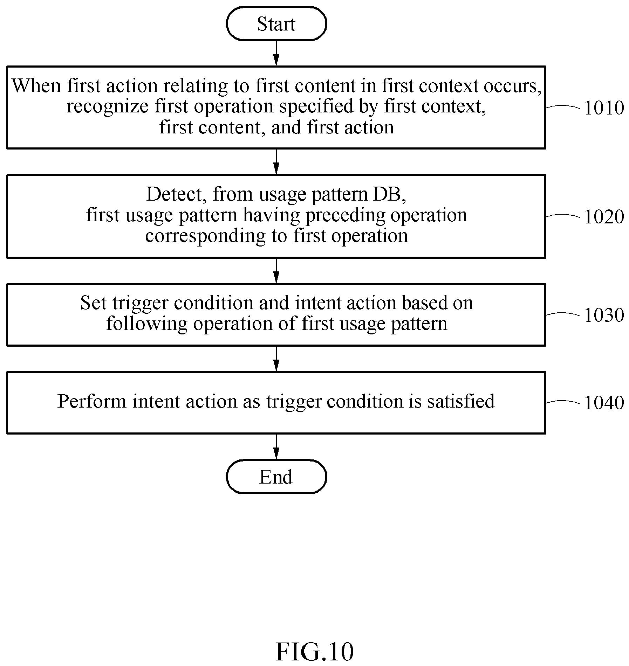

FIG. 10 is a flowchart illustrating an example control method according to an example embodiment. Operations 1010 through 1040 to be described hereinafter with reference to FIG. 10 may be performed in sequential order, but not be necessarily performed in sequential order. For example, the order of operations 1010 through 1040 may be changed, and/or at least two of operations 1010 through 1040 may be performed in parallel. Operations 1010 through 1040 may be performed by at least one component (e.g., the processor 120) of the electronic device 101, or in another embodiment at least some of operations 1010 through 1040 may be performed by a cooperative device (e.g., the electronic device 102, the electronic device 104, and the server 108).

Referring to FIG. 10, in operation 1010, when a first action relating to a first content occurs in a first context, a first operation specified by the first context, the first content, and the first action may be recognized. In operation 1020, a first usage pattern having a preceding operation corresponding to the first operation may be detected from a usage pattern DB. In operation 1030, a trigger condition and an intent action may be set based on a following operation of the first usage pattern. In operation 1040, as the trigger condition is satisfied, the intent action may be performed.

The preceding operation may be defined based on a preceding context, a preceding content, and a preceding action. The following operation may be defined based on a following context, a following content, and a following action. The preceding content may be the same as the following content. The first context, the first content, and the first action of the first operation may be matched to the preceding context, the preceding content, and the preceding action of the preceding operation. Operation 1030 may include setting the trigger condition based on the following context of the following operation and setting the intent action based on the following action of the following operation.

The preceding operation may be an operation of generating a target content in the preceding context, and the following operation may be an operation of opening the target content in the following context. The preceding context and the following context may correspond to different times and the same location. The preceding context and the following context may correspond to different times and different locations. Operation 1020 may include searching the usage pattern DB with a first operation record set corresponding to the first operation. The first operation record set may include at least one of a type of the first content, an entity of the first content, a time type of the first context, a location type of the first context, and a type of the first action.

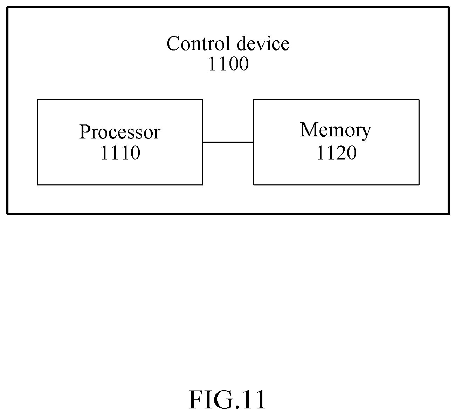

The control method may further include accumulating a plurality of prior operation record sets corresponding to a plurality of prior operations, and adding the first usage pattern to the usage pattern DB based on the repetition of candidate record sets corresponding to the preceding operation and the following operation of the first usage pattern among the prior operation record sets. The accumulating of the prior operation record sets may include collecting a first context record and a first content record based on a first prior operation, and storing the first prior operation record set by combining the first context record and the first content record. The first context record and the first content record may include basic data and processed data, respectively. The processed data may be generated by processing the basic data. In addition, what has been described above with reference to FIGS. 1 through 9 and what is to be described hereinafter with reference to FIG. 11 may be applied to the control method.

FIG. 11 is a block diagram illustrating an example control device according to an example embodiment. A control device 1100 may be structurally and/or functionally included in the electronic device 101, and/or additionally include a component of the electronic device 101. Referring to FIG. 11, the control device 1100 may include a processor 1110 and a memory 1120. The memory 1120 may include instructions executable in the processor 1110. When the instructions are executed in the processor 1110, the processor 1110 may recognize a first operation specified by a first context, a first content, and a first action in response to an occurrence of the first action relating to the first content in the first context, detect, from a usage pattern DB, a first usage pattern having a preceding operation corresponding to the first operation, set a trigger condition and an intent action based on a following operation of the first usage pattern, and perform the intent action as the trigger condition is satisfied. The first context, the first content, and the first action of the first operation may be matched to a preceding context, a preceding content, and a preceding action of the preceding operation. The processor 1110 may set the trigger condition based on a following context of the following operation, and set the intent action based on a following action of the following operation. In addition, what has been described above with reference to FIGS. 1 through 10 may be applicable to the control device 1100. For example, the foregoing description of the processor 120 of FIG. 1 may also be applied to the processor 1110, and the foregoing description of the memory 130 of FIG. 1 may also be applied to the memory 1120. The processor 1110 may include a microprocessor or any suitable type of processing circuitry, such as one or more general-purpose processors (e.g., ARM-based processors), a Digital Signal Processor (DSP), a Programmable Logic Device (PLD), an Application-Specific Integrated Circuit (ASIC), a Field-Programmable Gate Array (FPGA), a Graphical Processing Unit (GPU), a video card controller, etc. In addition, it would be recognized that when a general purpose computer accesses code for implementing the processing shown herein, the execution of the code transforms the general purpose computer into a special purpose computer for executing the processing shown herein. Certain of the functions and steps provided in the Figures may be implemented in hardware, software or a combination of both and may be performed in whole or in part within the programmed instructions of a computer. No claim element herein is to be construed as means-plus-function, unless the element is expressly recited using the phrase "means for." In addition, an artisan understands and appreciates that a "processor" or "microprocessor" may be hardware in the claimed disclosure.

An electronic device described herein may be a device of one of various types. The electronic device may include, as non-limiting examples, a portable communication device (e.g., a smartphone, etc.), a computing device, a portable multimedia device, a portable medical device, a camera, a wearable device, or a home appliance. However, the electronic device is not limited to the foregoing examples.

In connection with the description of the drawings, like reference numerals may be used for similar or related components. It should be understood that a singular form of a noun corresponding to an item may include one or more of the things, unless the relevant context clearly indicates otherwise. As used herein, "A or B," "at least one of A and B," "at least one of A or B," "A, B, or C," "at least one of A, B, and C," and "A, B, or C," each of which may include any one of the items listed together in the corresponding one of the phrases, or all possible combinations thereof. Although terms of "first" or "second" are used to explain various components, the components are not limited to the terms. These terms should be used only to distinguish one component from another component. For example, a "first" component may be referred to as a "second" component, or similarly, and the "second" component may be referred to as the "first" component according to the concept of the present disclosure. It should also be understood that, when a component (e.g., a first component) is referred to as being "connected to" or "coupled to" another component with or without the term "functionally" or "communicatively," the component can be connected or coupled to the other component directly (e.g., wiredly), wirelessly, or via a third component.

As used in connection with certain embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in the form of an application-specific integrated circuit (ASIC).

Certain embodiments set forth herein may be implemented as software (e.g., the program 140) including one or more instructions that are stored in a storage medium (e.g., the internal memory 136 or the external memory 138, or the memory 1120) that is readable by a machine (e.g., the electronic device 101 or the control device 1100). For example, a processor (e.g., the processor 120 or the processor 1110) of the machine (e.g., the electronic device 101 or the control device 1100) may invoke at least one of the one or more instructions stored in the storage medium, and execute it. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to certain embodiments, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to certain embodiments, each component (e.g., a module or a program) of the above-described components may include a single entity or multiple entities, and some of the multiple entities may be separately disposed in different components. According to certain embodiments, one or more of the above-described components or operations may be omitted, or one or more other components or operations may be added. Alternatively or additionally, a plurality of components (e.g., modules or programs) may be integrated into a single component. In such a case, according to certain embodiments, the integrated component may still perform one or more functions of each of the plurality of components in the same or similar manner as they are performed by a corresponding one of the plurality of components before the integration. According to certain embodiments, operations performed by the module, the program, or another component may be carried out sequentially, in parallel, repeatedly, or heuristically, or one or more of the operations may be executed in a different order or omitted, or one or more other operations may be added.

Certain of the above-described embodiments of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein.

## Claims

1. A control method, comprising:
when a first action relating to a first content occurs in a first context, recognizing a first operation specified by the first context, the first content, and the first action (1010);
detecting, from a usage pattern database, DB, a first usage pattern having a preceding operation corresponding to the first operation (1020);
setting a trigger condition and an intent action based on a following operation of the first usage pattern (1030); and
performing the intent action as the trigger condition is satisfied (1040); **characterised in that**:
the first action relating to a first content comprises a user generating, opening, editing or deleting the content.

2. The control method of claim 1, wherein the preceding operation is defined based on a preceding context, a preceding content, and a preceding action, and
the following operation is defined based on a following context, a following content, and a following action.

3. The control method of claim 2, wherein the preceding content and the following content are the same.

4. The control method of claim 1, wherein the first context, the first content, and the first action of the first operation are matched to a preceding context, a preceding content, and a preceding action of the preceding operation.

5. The control method of claim 1, wherein the setting of the trigger condition and the intent action further comprises:
setting the trigger condition based on a following context of the following operation; and
setting the intent action based on the following action of the following operation.

6. The control method of claim 1, wherein the preceding operation is an operation of generating a target content in a preceding context, and
the following operation is an operation of opening the target content in a following context.

7. The control method of claim 6, wherein the preceding context and the following context correspond to different times and a same location.

8. The control method of claim 6, wherein the preceding context and the following context correspond to different times and different locations.

9. The control method of claim 1, wherein the detecting of the first usage pattern further comprises:
searching the usage pattern DB with a first operation record set corresponding to the first operation,
wherein the first operation record set comprises a type of the first content, an entity of the first content, a time type of the first context, a location type of the first context, and/or a type of the first action.

10. The control method of claim 1, further comprising:
accumulating a plurality of prior operation record sets associated with a plurality of prior operations; and
adding the first usage pattern to the usage pattern DB based on repetition of candidate record sets corresponding to the preceding operation and the following operation of the first usage pattern in the plurality of prior operation record sets.

11. The control method of claim 10, wherein the accumulating of the plurality of prior operation record sets further comprises:
collecting a first context record and a first content record associated with a first prior operation; and
storing a first prior operation record set by combining the first context record and the first content record.

12. The control method of claim 11, wherein the first context record and the first content record each comprise basic data and processed data,
wherein the processed data is generated by processing the basic data.

13. An electronic device (1100), comprising:
a processor (1110); and
a memory (1120) configured to store instructions executable by the processor (1110),
wherein, when the instructions are executed by the processor (1110), the processor (1110) is configured to:
when a first action relating to a first content occurs in a first context, recognize a first operation specified by the first context, the first content, and the first action,
detect, from a usage pattern database, DB, a first usage pattern having a preceding operation corresponding to the first operation,
set a trigger condition and an intent action based on a following operation of the first usage pattern, and
perform the intent action as the trigger condition is satisfied,
wherein the preceding operation is defined based on a preceding context, a preceding content, and a preceding action, and
the following operation is defined based on a following context, a following content, and a following action; and **characterised in that** the first action relating to a first content comprises a user generating, opening, editing or deleting the content.

14. The electronic device of claim 13, wherein the first context, the first content, and the first action of the first operation are matched to the preceding context, the preceding content, and the preceding action of the preceding operation.

15. The electronic device of claim 13, wherein the processor is configured to:
set the trigger condition based on the following context of the following operation; and
set the intent action based on the following action of the following operation.

## Patentansprüche

1. Steuerungsverfahren, umfassend:
wenn eine erste Handlung in Bezug auf einen ersten Inhalt in einem ersten Kontext auftritt, Erkennen eines ersten Vorgangs, der durch den ersten Kontext, den ersten Inhalt und die erste Handlung (1010) spezifiziert wird;
Ermitteln, aus einer Nutzungsmusterdatenbank, DB,
eines ersten Nutzungsmusters, das einen vorhergehenden Vorgang aufweist, der dem ersten Vorgang (1020) entspricht;
Festlegen einer Auslösebedingung und einer beabsichtigten Handlung auf der Basis eines folgenden Vorgangs des ersten Nutzungsmusters (1030); und
Durchführen der beabsichtigten Handlung, wenn die Auslösebedingung erfüllt ist (1040); **dadurch gekennzeichnet, dass**:
die erste Handlung in Bezug auf einen ersten Inhalt einen Benutzer umfasst, der den Inhalt generiert, öffnet, bearbeitet oder löscht.

2. Steuerungsverfahren nach Anspruch 1, wobei der vorhergehende Vorgang auf der Basis eines vorhergehenden Kontexts, eines vorhergehenden Inhalts und einer vorhergehenden Handlung definiert wird, und
der folgende Vorgang auf der Basis eines folgenden Kontexts, eines folgenden Inhalts und einer folgenden Handlung definiert wird.

3. Steuerungsverfahren nach Anspruch 2, wobei der vorhergehende Inhalt und der folgende Inhalt gleich sind.

4. Steuerungsverfahren nach Anspruch 1, wobei der erste Kontext, der erste Inhalt und die erste Handlung des ersten Vorgangs mit einem vorhergehenden Kontext, einem vorhergehenden Inhalt und einer vorhergehenden Handlung des vorhergehenden Vorgangs abgeglichen werden.

5. Steuerungsverfahren nach Anspruch 1, wobei das Festlegen der Auslösebedingung und der beabsichtigten Handlung ferner Folgendes umfasst:
Festlegen der Auslösebedingung auf der Basis eines folgenden Kontexts des folgenden Vorgangs; und
Festlegen der beabsichtigten Handlung auf der Basis der folgenden Handlung des folgenden Vorgangs.

6. Steuerungsverfahren nach Anspruch 1, wobei der vorhergehende Vorgang ein Vorgang des Generierens eines Zielinhalts in einem vorhergehenden Kontext ist, und
der folgende Vorgang ein Vorgang zum Öffnen des Zielinhalts in einem folgenden Kontext ist.

7. Steuerungsverfahren nach Anspruch 6, wobei der vorhergehende Kontext und der folgende Kontext unterschiedlichen Zeiten und einer gleichen Position entsprechen.

8. Steuerungsverfahren nach Anspruch 6, wobei der vorhergehende Kontext und der folgende Kontext unterschiedlichen Zeiten und unterschiedlichen Positionen entsprechen.

9. Steuerungsverfahren nach Anspruch 1, wobei das Ermitteln des ersten Nutzungsmusters ferner Folgendes umfasst:
Durchsuchen der Nutzungsmuster-DB mit einer ersten Vorgangsdatensatzgruppe, die dem ersten Vorgang entspricht,
wobei die erste Vorgangsdatensatzgruppe einen Typ des ersten Inhalts, eine Entität des ersten Inhalts, einen Zeittyp des ersten Kontexts, einen Positionstyp des ersten Kontexts und/oder einen Typ der ersten Handlung umfasst.

10. Steuerungsverfahren nach Anspruch 1, ferner umfassend:
Akkumulieren einer Vielzahl von früheren Vorgangsdatensatzgruppen im Zusammenhang mit einer Vielzahl von früheren Vorgängen; und
Hinzufügen des ersten Nutzungsmusters zu der Nutzungsmuster-DB auf der Basis der Wiederholung von Kandidatensatzgruppen, die dem vorhergehenden Vorgang und dem folgenden Vorgang des ersten Nutzungsmusters in der Vielzahl von früheren Vorgangsdatensatzgruppen entsprechen.

11. Steuerungsverfahren nach Anspruch 10, wobei das Akkumulieren der Vielzahl von früheren Vorgangsdatensatzgruppen ferner Folgendes umfasst:
Sammeln eines ersten Kontextdatensatzes und eines ersten Inhaltsdatensatzes im Zusammenhang mit einem ersten früheren Vorgang; und
Speichern einer ersten früheren Vorgangsdatensatzgruppe durch Kombinieren des ersten Kontextdatensatzes und des ersten Inhaltsdatensatzes.

12. Steuerungsverfahren nach Anspruch 11, wobei der erste Kontextdatensatz und der erste Inhaltsdatensatz jeweils Basisdaten und verarbeitete Daten umfassen,
wobei die verarbeiteten Daten durch das Verarbeiten der Basisdaten generiert werden.

13. Elektronisches Gerät (1100), umfassend:
einen Prozessor (1110); und
einen Speicher (1120), der dazu konfiguriert ist, Anweisungen zu speichern, die durch den Prozessor (1110) ausführbar sind,
wobei, wenn die Anweisungen durch den Prozessor (1110) ausgeführt werden, der Prozessor (1110) zu Folgendem konfiguriert ist:
wenn eine erste Handlung in Bezug auf einen ersten Inhalt in einem ersten Kontext auftritt, Erkennen eines ersten Vorgangs, der durch den ersten Kontext, den ersten Inhalt und die erste Handlung spezifiziert wird,
Ermitteln, aus einer Nutzungsmusterdatenbank, DB,
eines ersten Nutzungsmusters, das einen vorhergehenden Vorgang aufweist,
der dem ersten Vorgang entspricht,
Festlegen einer Auslösebedingung und einer beabsichtigten Handlung auf der Basis eines folgenden Vorgangs des ersten Nutzungsmusters, und
Durchführen der beabsichtigten Handlung, wenn die Auslösebedingung erfüllt ist,
wobei der vorhergehende Vorgang auf der Basis eines vorhergehenden Kontexts, eines vorhergehenden Inhalts und einer vorhergehenden Handlung definiert wird, und
der folgende Vorgang auf der Basis eines folgenden Kontexts, eines folgenden Inhalts und einer folgenden Handlung definiert wird; und **dadurch gekennzeichnet, dass** die erste Handlung in Bezug auf einen ersten Inhalt einen Benutzer umfasst, der den Inhalt generiert, öffnet, bearbeitet oder löscht.

14. Elektronisches Gerät nach Anspruch 13, wobei der erste Kontext, der erste Inhalt und die erste Handlung des ersten Vorgangs mit dem vorhergehenden Kontext, dem vorhergehenden Inhalt und der vorhergehenden Handlung des vorhergehenden Vorgangs abgeglichen werden.

15. Elektronisches Gerät nach Anspruch 13, wobei der Prozessor zu Folgendem konfiguriert ist:
Festlegen der Auslösebedingung auf der Basis des folgenden Kontexts des folgenden Vorgangs; und
Festlegen der beabsichtigten Handlung auf der Basis der folgenden Handlung des folgenden Vorgangs.

## Revendications

1. Procédé de commande, comprenant :
lorsqu'une première action relative à un premier contenu se produit dans un premier contexte, la reconnaissance d'une première opération spécifiée par le premier contexte, le premier contenu et la première action (1010) ;
la détection, à partir d'une base de données, DB, de motif d'utilisation
un premier motif d'utilisation comportant une opération précédente correspondant à la première opération (1020) ;
le réglage d'une condition de déclenchement et d'une action d'intention sur la base d'une opération suivante du premier motif d'utilisation (1030) ; et
la réalisation de l'action d'intention lorsque la condition de déclenchement est satisfaite (1040) ;
**caractérisé en ce que** :
la première action relative à un premier contenu comprend la génération, l'ouverture, l'édition ou la suppression du contenu par un utilisateur.

2. Procédé de commande de la revendication 1, ladite opération précédente étant définie sur la base d'un contexte précédent, d'un contenu précédent et d'une action précédente, et
ladite opération suivante étant définie sur la base d'un contexte suivant, d'un contenu suivant et d'une action suivante.

3. Procédé de commande de la revendication 2, ledit contenu précédent et ledit contenu suivant étant identiques.

4. Procédé de commande de la revendication 1, ledit premier contexte, ledit premier contenu et ladite première action de la première opération étant mis en correspondance avec un contexte précédent, un contenu précédent et une action précédente de l'opération précédente.

5. Procédé de commande de la revendication 1, ledit réglage de la condition de déclenchement et de l'action d'intention comprenant en outre :
le réglage de la condition de déclenchement sur la base d'un contexte suivant de l'opération suivante ; et
le réglage de l'action d'intention sur la base de l'action suivante de l'opération suivante.

6. Procédé de commande de la revendication 1, ladite opération précédente étant une opération de génération d'un contenu cible dans un contexte précédent, et
ladite opération suivante étant une opération d'ouverture du contenu cible dans un contexte suivant.

7. Procédé de commande de la revendication 6, ledit contexte précédent et ledit contexte suivant correspondant à des temps différents et à un même emplacement.

8. Procédé de commande de la revendication 6, ledit contexte précédent et ledit contexte suivant correspondant à des temps différents et à des emplacements différents.

9. Procédé de commande de la revendication 1, ladite détection du premier motif d'utilisation comprenant en outre :
la recherche de la DB de motif d'utilisation avec un premier ensemble d'enregistrements d'opération correspondant à la première opération,
ledit premier ensemble d'enregistrements d'opération comprenant un type du premier contenu, une entité du premier contenu, un type de temps du premier contexte, un type d'emplacement du premier contexte et/ou un type de la première action.

10. Procédé de commande de la revendication 1, comprenant en outre :
l'accumulation d'une pluralité d'ensembles d'enregistrements d'opérations antérieures associés à une pluralité d'opérations antérieures ; et
l'ajout du premier motif d'utilisation à la DB de motif d'utilisation sur la base de la répétition d'ensembles d'enregistrements candidats correspondant à l'opération précédente et à l'opération suivante du premier motif d'utilisation dans la pluralité d'ensembles d'enregistrements d'opération antérieure.

11. Procédé de commande de la revendication 10, ladite accumulation de la pluralité d'ensembles d'enregistrements d'opérations antérieures comprenant en outre :
la collecte d'un premier enregistrement de contexte et d'un premier enregistrement de contenu associés à une première opération antérieure ; et
le stockage d'un premier ensemble d'enregistrement d'opération antérieure défini en combinant le premier enregistrement de contexte et le premier enregistrement de contenu.

12. Procédé de commande de la revendication 11, ledit premier enregistrement de contexte et ledit premier enregistrement de contenu comprenant chacun des données de base et des données traitées,
lesdites données traitées étant générées par le traitement des données de base.

13. Dispositif électronique (1100) comprenant :
un processeur (1110) ; et
une mémoire (1120) configurée pour stocker des instructions exécutables par le processeur (1110), lorsque les instructions sont exécutées par le processeur (1110), ledit processeur (1110) étant configuré pour :
lorsqu'une première action relative à un premier contenu se produit dans un premier contexte, reconnaître une première opération spécifiée par le premier contexte, le premier contenu et la première action,
détecter, à partir d'une base de données, DB, de motif d'utilisation
un premier motif d'utilisation comportant une opération précédente
correspondant à la première opération, régler une condition de déclenchement et une action d'intention sur la base d'une opération suivante du premier motif d'utilisation, et
réaliser l'action d'intention tandis que la condition de déclenchement est satisfaite,
ladite opération précédente étant définie sur la base d'un contexte précédent, d'un contenu précédent et d'une action précédente, et
ladite opération suivante étant définie sur la base d'un contexte suivant, d'un contenu suivant et d'une action suivante ; et **caractérisée en ce que** la première action relative à un premier contenu comprend la génération, l'ouverture, l'édition ou la suppression du contenu par un utilisateur.

14. Dispositif électronique de la revendication 13, ledit premier contexte, ledit premier contenu et ladite première action de la première opération étant mis en correspondance avec le contexte précédent, le contenu précédent et l'action précédente de l'opération précédente.

15. Dispositif électronique de la revendication 13, ledit processeur étant configuré pour :
régler la condition de déclenchement sur la base du contexte suivant de l'opération suivante ; et
régler l'action d'intention sur la base de l'action suivante de l'opération suivante.
